(19) 

**Europäisches Patentamt**
**European Patent Office**
**Office européen des brevets**

(11) **EP 3 252 943 A1**

(12) **EUROPÄISCHE PATENTANMELDUNG**

(43) Veröffentlichungstag:
**06.12.2017 Patentblatt 2017/49**

(51) Int Cl.:
*H02P 29/024* (2016.01)     *H02P 29/032* (2016.01)
*G01P 3/48* (2006.01)     *G01L 3/10* (2006.01)

(21) Anmeldenummer: **17173121.9**

(22) Anmeldetag: **26.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **02.06.2016 DE 102016110260**
**22.11.2016 DE 102016122547**

(71) Anmelder: **Trafag AG**
**8608 Bubikon (CH)**

(72) Erfinder: **SCHANZ, Christoph**
**72636 Frickenhausen (DE)**

(74) Vertreter: **Kastel, Stefan**
**Kastel Patentanwälte**
**St.-Cajetan-Straße 41**
**81669 München (DE)**

(54) **DREHMOMENTREGELVORRICHTUNG, ELEKTROANTRIEB UND VERFAHREN ZUR DREHMOMENTREGELUNG**

(57) Die Erfindung betrifft eine Drehmomentregelvorrichtung (20) zum Regeln der Ausgangsleistung und/oder des Drehmoments eines Elektroantriebes (10), der einen Elektromotor (12) mit Ständer und Läufer und vorzugsweise eine mit dem Läufer zur gemeinsamen Drehung verbundene Abtriebswelle (14) hat. Um eine genauere Regelung bei gleichzeitiger Möglichkeit der Implementierung einer verbesserten Sicherheitsüberwachung des Elektroantriebs (14) zu ermöglichen, wird einen Drehmomentsensor (26) zum Messen eines zwischen Ständer und Läufer anliegenden Drehmoments, insbesondere durch Messen an der Abtriebswelle (14), und eine mit dem Drehmomentsensor (26) verbundene Steuerung (24) vorgesehen, die dazu eingerichtet ist, den Elektromotor (12) in Abhängigkeit von dem durch den Drehmomentsensor (26) gemessenen Drehmoment zu steuern. Außerdem werden ein entsprechendes Regelverfahren und eine vorteilhafte Drehmomentsensoranordnung zur Verwendung in der Vorrichtung und in dem Verfahren vorgeschlagen.

FIG 2

EP 3 252 943 A1

**Beschreibung**

Die Erfindung betrifft eine Vorrichtung und ein Verfahren zum Regeln der Ausgangsleistung und/oder des Drehmoments eines Elektroantriebes, der einen Elektromotor mit Ständer und Läufer und vorzugsweise eine mit dem Läufer zur gemeinsamen Drehung verbundene Abtriebswelle hat. Weiter betrifft die Erfindung eine für eine solche Vorrichtung und ein solches Verfahren verwendbare Drehmomentsensoranordnung.

Bei bisher auf dem Markt erhältlichen Leistungselektroniken für Elektroantriebe kann durch das Messen der Phasenströme und Phasenspannungen die Leistungsaufnahme eines Elektromotors relativ genau gemessen werden. Durch entsprechende Modelle zum Wirkungsgrad und verschiedener Abhängigkeiten (Temperaturabhängigkeit, Alterungsverhalten...) kann die Ausgangsleistung berechnet werden. Mit diesen Größen können Elektromotoren auf ein spezifisches Drehmoment bei bekannter Winkelgeschwindigkeit der Achse geregelt werden. Derartige Elektroantriebe und deren Vorrichtungen zur Drehmomentregelung finden sich beispielsweise in auf dem Markt erhältlichen Haupt-Elektroantrieben für Elektrofahrzeuge.

Ein Beispiel für eine bekannte Regelung eines Elektroantriebes auf dem Gebiet der elektrischen Lenksysteme findet sich in der US2005037884A1.

Die Erfindung hat sich zur Aufgabe gestellt, derartige Vorrichtungen und Verfahren zur Drehmomentregelung und/oder Regelung der Leistung von Elektroantrieben hinsichtlich der Genauigkeit des Ausgangsdrehmoments bzw. der Ausgangsleistung und/oder hinsichtlich Sicherheitsaspekten zu verbessern.

Diese Aufgabe wird durch eine Vorrichtung und ein Verfahren gemäß den unabhängigen Ansprüchen gelöst. Eine mit einer solchen Vorrichtung versehener Elektroantrieb ist Gegenstand des weiteren Nebenanspruchs.

Vorteilhafte Ausgestaltungen sind Gegenstand der Unteransprüche.

Die Erfindung schafft eine Drehmomentregelvorrichtung zum Regeln der Ausgangsleistung und/oder des Drehmoments eines Elektroantriebes, der einen Elektromotor mit Ständer und Läufer hat, umfassend:

    einen Drehmomentsensor zum Messen eines Drehmoments zwischen dem Ständer und dem Läufer und eine mit dem Drehmomentsensor verbundene Steuerung, die dazu eingerichtet ist, den Elektromotor in Abhängigkeit von dem durch den Drehmomentsensor gemessenen Drehmoment zu steuern.

Vorzugsweise ist die Drehmomentregelvorrichtung zum Regeln eines Elektroantriebes ausgebildet, der eine mit dem Läufer zur gemeinsamen Drehung verbundene Abtriebswelle hat, wobei das Drehmoment an der Antriebswelle gemessen wird. Bei alternativen Ausgestaltungen, insbesondere beispielsweise bei einem Außenläufermotor, kann das Drehmoment auch an einer mit dem Ständer verbundenen Baueinheit gemessen werden. Z.B. könnte eine Abstützkraft an einer den Ständer stützenden Befestigungsbaueinheit gemessen werden und daraus das Drehmoment erhalten werden.

Unter einer Baueinheit, die mit dem Läufer verbunden ist, ist eine Baueinheit zu verstehen, über das Kräfte von dem Läufer auf eine angetriebene Einheit zu übertragen sind. Die Baueinheit kann getrennt von dem Läufer ausgebildet sein und lediglich damit gekoppelt sein oder auch einstückig mit dem Läufer ausgebildet sein. Eine Abtriebswelle des Elektromotors ist eine bevorzugte Ausführung einer solchen mit dem Läufer verbundene Baueinheit.

Unter einer Baueinheit, die mit dem Ständer verbunden ist, ist eine Baueinheit zu verstehen, über die Kräfte zum Halten des Ständers zu übertragen sind. Die Baueinheit kann getrennt von dem Ständer ausgebildet sein und lediglich damit gekoppelt sein oder auch einstückig mit dem Ständer ausgebildet sein.

Insbesondere lässt sich mit der Erfindung ein drehmomentgeregelter Elektromotor bereitstellen, dessen Regelung nicht durch Spannung/Strom sondern durch ein aktives Sensorelement erfolgt.

Ein bevorzugte Ausgestaltung der Erfindung ist gekennzeichnet durch einen Drehzahlsensor zur Messung der Drehzahl der Abtriebswelle, wobei die Steuerung mit dem Drehzahlsensor verbunden ist und dazu eingerichtet ist, den Elektromotor in Abhängigkeit von dem durch den Drehmomentsensor gemessenen Drehmoment und der durch den Drehzahlsensor verbundenen Drehzahl zu steuern.

Es ist bevorzugt, dass die Steuerung dazu eingerichtet ist, aus dem Drehmoment und der Drehzahl die Ausgangsleistung des Elektroantriebes zu ermitteln und den Elektromotor in Abhängigkeit von der ermittelten Ausgangsleistung zu steuern.

Es ist bevorzugt, dass die Steuerung zur Überwachung der Leistungsabgabe des Elektroantriebes eingerichtet ist.

Es ist bevorzugt, dass die Steuerung dazu eingerichtet ist, den Elektroantrieb abhängig von einer aus einem Eingangsstrom und einer Eingangsspannung ermittelten Eingangsleistung und einer aus dem Drehmoment ermittelten Ausgangsleistung und einer Sollleistung zu steuern und/oder zu überwachen.

Vor allem bei der Elektromobilität gibt es ein Erfordernis (SIL2 gemäß EN61508 und/oder Performance Level d gemäß ISO 13849-1), dass die Ausgangsleistung des Elektromotor überwacht wird. Das kann man mit Spannung/Strom machen. Wesentlich genauer geht dies aber durch unmittelbare Überwachung über direkte Sensoren an der Abtriebswelle, wie bei der Erfindung vorgeschlagen. Besondere Vorteile hat die erfindungsgemäße Idee, wenn der Elektroantrieb man für ein Torque Vectoring auf das Drehmoment geregelt wird. In einem solchen Fall ist ein aktives Sensorelement wie bei der Erfindung vorgeschlagen sehr vorteilhaft, da man nicht auf sowohl Spannung/Strom regeln kann und diese Größe auch noch für die Sicherheits-Überwachung verwenden kann.

Es ist bevorzugt, dass der Drehmomentsensor ein induktiver berührungsloser Sensor zur induktiven Drehmomenterfassung unmittelbar an der Baueinheit, insbesondere der Abtriebswelle, mittels magnetischer Wechselfelder ist. Derartige Sensoren sind sehr einfach an der Abtriebswelle oder einer sonstigen Baueinheit (z.B. an einer Stütze für den Ständer) einsetzbar, wobei die Baueinheit wie z.B. die Abtriebswelle auch unverändert bleiben kann und keine aktiven Elemente im mitdrehenden System benötigt werden. Die berührungslose Messung erfolgt ohne Reibungsverluste und ist im Wesentlichen wartungsfrei.

Bei einer Ausgestaltung der Erfindung kommt eine Drehmomentsensoranordnung zur Messung eines Drehmoments an einer Drehwelle zum Einsatz, umfassend die Drehwelle und einen Drehmomentsensors zum induktiven Messen des Drehmoments der Drehwelle mittels magnetischer Wechselfelder und eine Auswerteeinrichtung zur Auswertung des Signals des Drehmomentsensors, wobei die Drehwelle einen Oberflächenmarke an einem durch den Drehmomentsensor erfassten Umfangsbereich hat, die sich bei Drehung der Drehwelle um die Drehachse dreht und bei Passieren des Drehmomentsensors eine Veränderung im Signal des Drehmomentsensors hervorruft, wobei die Auswerteeinrichtung dazu ausgebildet ist, aus der periodischen Veränderung des Signals des Drehmomentsensors eine Drehzahl der Welle zu ermitteln.

Mit einer derartigen Drehmomentsensoranordnung kann man gleichzeitig mit einem Signal sowohl das Drehmoment der Drehwelle (z.B. der Abtriebswelle) als auch deren Drehzahl bestimmen. Damit kann man mit einem Signal unmittelbar die mechanische Leistung an der Drehwelle bestimmen. Dies ist selbstverständlich für die Regelung von Elektroantrieben hoch interessant, kann aber auch für andere Verwendungen Anwendung finden. Z.B. könnte sich bei unterschiedlichen Anwendungen (PKW; LKW; Schiffe; Maschinen; Flugzeuge; Fahrzeuge) an einer Abtriebswelle die mechanische Leistung unmittelbar messen.

Bei einer bevorzugten Ausführungsform der Erfindung ist die Drehmomentsensoranordnung zur Verwendung in einer Drehmomentregelung gemäß einer der zuvor erläuterten Ausgestaltungen ausgebildet, wobei die Abtriebswelle die zu vermessende Drehwelle der Drehmomentsensoranordnung ist.

Es ist bevorzugt, dass die Oberflächenmarke eine sich in axialer Richtung erstreckende Abflachung, Einkerbung oder Erhöhung an der Oberfläche des Umfangsbereichs umfasst.

Es ist bevorzugt, dass die Oberflächenmarke eine vorgegebene Erstreckung in Umfangsrichtung hat, wobei die Auswerteeinrichtung dazu eingerichtet ist, aus der Länge einer durch die Oberflächenmarke in dem Signal des Drehmomentsensors verursachten Signaländerung eine Drehgeschwindigkeit zu ermitteln.

Gemäß einem weiteren Aspekt schafft die Erfindung eine Drehmomentregelvorrichtung wie oben erläutert, umfassend eine Drehmomentsensoranordnung nach einer der zuvor erläuterten Ausgestaltungen.

Gemäß einem weiteren Aspekt schafft die Erfindung einen Elektroantrieb, umfassend eine Drehmomentregelvorrichtung und/oder eine Drehmomentsensoranordnung nach einer der erfindungsgemäßen oder vorteilhaften Ausgestaltungen.

Gemäß einem weiteren Aspekt schafft die Erfindung ein Verfahren zum Regeln der Ausgangsleistung und/oder des Drehmoments eines Elektroantriebes, der einen Elektromotor mit Ständer und Läufer und eine mit dem Läufer zur gemeinsamen Drehung verbundene Abtriebswelle hat, umfassend:

>   Messen eines Drehmoments an der Abtriebswelle mittels eines Drehmomentsensors und steuern des Elektromotors in Abhängigkeit von dem durch den Drehmomentsensor gemessenen Drehmoment.

Eine bevorzugte Ausgestaltung des Verfahrens umfasst:

>   Messen der Drehzahl der Abtriebswelle und Steuern des Elektromotors in Abhängigkeit von dem durch den Drehmomentsensor gemessenen Drehmoment und der durch den Drehzahlsensor ermittelten Drehzahl.

Eine bevorzugte Ausgestaltung des Verfahrens umfasst:

>   Ermitteln der Ausgangsleistung des Elektroantriebes aus dem Drehmoment und der Drehzahl und Steuern des Elektromotors in Abhängigkeit von der ermittelten Ausgangsleistung.

Eine bevorzugte Ausgestaltung des Verfahrens umfasst:

>   Überwachen der Leistungsabgabe des Elektroantriebes mittels der Ausgangsleistung, der aus einem Eingangsstrom und einer Eingangsspannung ermittelten Eingangsleistung und einer Sollleistung.

Eine bevorzugte Ausgestaltung des Verfahrens umfasst:

>   berührungsloses induktives Messen des Drehmoments an der Abtriebswelle mittels magnetischer Wechselfelder.

Eine bevorzugte Ausgestaltung des Verfahrens umfasst:

>   Verwenden einer Abtriebswelle, die eine Oberflächenmarke an einem durch den Drehmomentsensor erfassten Umfangsbereich hat, welche sich bei Drehung der Abtriebswelle um die Drehachse dreht und bei Passieren des Drehmomentsensors eine Veränderung im Signal des Drehmomentsensors hervorruft, und
Ermitteln der Drehzahl der Abtriebswelle aus der Periode der Veränderung des Signals des Drehmomentsensors.

Eine bevorzugte Ausgestaltung des Verfahrens umfasst:

Vorsehen einer sich in axialer Richtung erstreckenden Abflachung, Einkerbung oder Erhöhung an der Oberfläche des Umfangsbereichs zum Bilden der Oberflächenmarke.

Eine bevorzugte Ausgestaltung des Verfahrens umfasst:

Vorsehen der Oberflächenmarke mit einer vorgegebenen Erstreckung in Umfangsrichtung und Ermitteln der Drehgeschwindigkeit aus der Länge einer durch die Oberflächenmarke in dem Signal des Drehmomentsensors verursachten Signaländerung.

Die Erfindung betrifft insbesondere eine Drehmomentregelung eines Elektromotors oder für einen Elektromotor.
Eine bevorzugte Ausgestaltung betrifft eine Drehmomentregelung eines Elektromotors durch Messung der Ausgangsleistung mittels eines Drehmomentsensors und eines Drehzahlsensors. Hierdurch ist eine sehr genaue Regelung möglich.
Die Drehmomentregelvorrichtung gemäß der Erfindung oder deren Ausgestaltungen ist vorzugsweise zur Durchführung des Verfahrens gemäß einer der oben erwähnten Ausgestaltungen ausgebildet. Das Verfahren ist insbesondere mit einer solchen Vorrichtung durchführbar.
Vorzugsweise umfassen die Vorrichtung und das Verfahren zusätzlich oder alternativ eine Überwachung der Motorleistungsabgabe als Sicherheitsüberwachung mittels der Eingangsleistung (Spannung, Strom).
Damit ist eine sehr gute Sicherheitsüberwachung für drehmomentgeregelte Elektromotoren möglich. Dadurch, dass man die über gemessenes Drehmoment und gemessene Drehzahl ermittelte tatsächliche Ausgangsleistung als Regeleingangsgrößen heranzieht, kann man die Spannung und den Strom als zusätzliche Größen für andere Aufgaben, insbesondere die Sicherheitsüberwachung heranziehen. Außerdem kann man durch einen Vergleich auch ohne Umwege über Berücksichtigung weitere Parameter (wie Umweltbedingungen) den Wirkungsgrad und die Verlustleistung bestimmen.
Eine vorteilhafte Anwendung wird im Folgenden erläutert: Durch den Einsatz von Elektromotoren in der Elektromobilität wird deren Funktion als sicherheitskritisch eingestuft, d.h. die Leistungsabgabe sollte in einer Safety-Funktion überwacht werden. Diese Überwachung kann mittels Strom und Spannung umgesetzt werden. Bei einer aktiven Regelung der Ausgangsleistung des Elektromotor (Torque Vectoring, Anti-Schlupf Regelung....) an der Welle eines Antrieb benötigt es eine zweite Messeinrichtung für die aktive Regelung, um die Funktionsüberwachung mittels Spannung und Strom als unabhängige Größe außerhalb des Regelkreis weiterhin verwenden zu können. Gemäß einer vorteilhaften Ausgestaltung der Erfindung wird hierzu eine unmittelbare Messung des Drehmoments und gegebenenfalls der Drehzahl an der Abtrieswelle vorgeschlagen
Ein Aspekt der Erfindung betrifft einen Drehmomentsensor an der Ausgangswelle eines Elektromotor für die Messung des Drehmoments. Vorzugsweise wird der Drehmomentsensor zum Regeln oder zur Erfüllung eines Sicherheitsmerkmales eingesetzt. wären ja dann alles Anwendungen die aufgrund der allgemeinen Beschreibung entstehen - so fokussieren wir uns nicht auf eine Anwendung sondern auf alles was mit einem Drehmomentsensor am Ausgang gemacht werden kann.
Vorzugsweise ist Drehmomentsensor ein induktiven Sensor. Der Drehmomentsensor kann aber nach jedem möglichen Prinzip, das Drehmoment auf der Welle zu messen arbeiten.
Selbstverständlich kann anstelle des Elektromotors auch ein Generator vorgesehen sein.
Ausführungsbeispiele der Erfindung werden im Folgenden anhand der beigefügten Zeichnungen näher erläutert. Darin zeigt:

Fig. 1    eine schematische Darstellung eines Elektroantriebes mit einem Elektromotor;

Fig. 2    der Elektroantrieb von Fig. 1 mit einer Drehmomentregelvorrichtung zum Regeln des Drehmoments und/oder der Abtriebsleistung des Elektromotors;

Fig. 3    eine schematische Darstellung einer Drehmomentsensoranordnung zur Verwendung in der Drehmomentregelvorrichtung nach Fig. 2;

Fig. 4    Graph des Signals eines Drehmomentsensors der Drehmomentsensoranordnung von Fig. 3 über der Zeit;

Fig. 5    eine schematische Darstellung einer weiteren Ausführungsform der Drehmomentsensoranordnung; und

Fig. 6    ein Graph des Signals eines Drehmomentsensors der Drehmomentsensoranordnung von Fig. 3 über der Zeit.

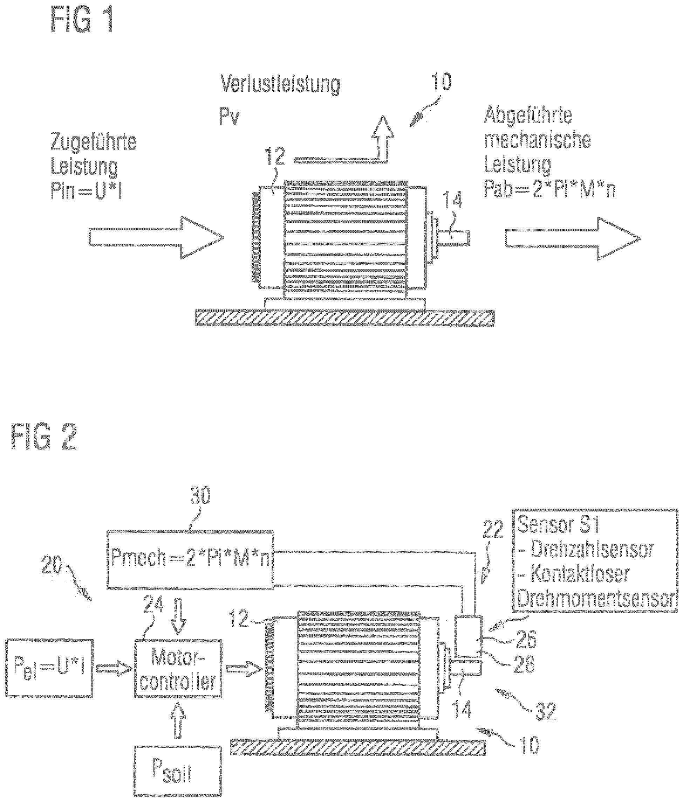

In Fig. 1 ist ein Elektroantrieb 10 schematisch dargestellt, der hier durch einen Elektromotor 12 mit Ständer und Läufer (nicht im Einzelnen dargestellt, gut bekannt) ausgebildet ist. Eine Welle des Läufers bildet eine Abtriebswelle 14 des Elektroantriebs 10. Bei anderen (nicht dargestellten) Ausgestaltungen ist die Abtriebswelle 14 eine mit der Welle des Läufers zur gemeinsamen Drehung gekuppelte Welle, z.B. eine Endwelle eines am Elektromotor vorgesehenen Motorgetriebes.

Bei Elektromotoren wird bisher die Antriebsleistung P nur über die Spannung U und den Strom I mit P= U*I bestimmt. Dadurch wird aber die Eingangsleistung $P_{in}$=U*I bestimmt. Um die Abtriebsleistung zu bestimmen, musste daher über Modellrechnungen die Verlustleistung Pv berücksichtigt werden.

Für die mechanische Abtriebleistung $P_{ab}$ gilt: $P_{ab}$ = 2*Pi*M*n, wobei M das Drehmoment an der Abtriebswelle 12 und n die Drehzahl der Abtriebswelle 14 bezeichnet. Wollte man bisher den Elektroantrieb 10 so regeln, dass ein konstantes Abtriebsdrehmoment M abgegeben wird, dann hat man entsprechend die Eingangsleistung anhand der gemessenen Spannung U und dem gemessenen Strom I geregelt.

In Fig. 2 ist der Elektroantrieb 10 mit einer Drehmomentregelvorrichtung 20 dargestellt. Die Drehmomentregelvorrichtung 20 umfasst eine Drehmomentsensoranordnung 22 und eine Steuerung 24, die mit der Drehmomentsensoranordnung 22 verbunden ist, um den Elektromotor 12 abhängig von einem durch einen Drehmomentsensor 26 der Drehmomentsensoranordnung 22 gemessenen Drehmoment M an der Abtriebswelle 14 zu steuern.

Weiter umfasst die dargestellte Drehmomentregelvorrichtung 20 einen Drehzahlsensor 28 zur Erfassung der Drehzahl n der Abtriebswelle 14.

Die Drehmomentsensoranordnung 22 weist den Drehmomentsensor 26, eine Auswerteeinheit 30 und eine Drehwelle 32 auf, wobei das Drehmoment an der Drehwelle 32 erfasst wird.

Bei der in Fig. 2 dargestellten Anwendung der Drehmomentsensoranordnung 22 ist die Drehwelle 32 gleich der Abtriebswelle 14 des Elektroantriebs 10.

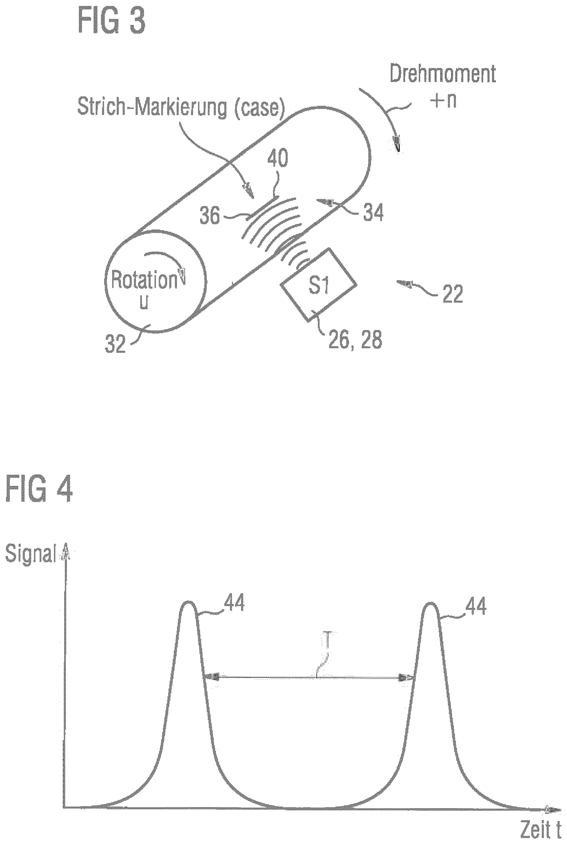

Wie im Folgenden anhand der Darstellungen der Fig. 3 bis 6 erläutert wird, ist der Drehmomentsensor 26 zusammen mit der Auswerteeinheit 30 auch dazu ausgebildet, die Drehzahl der Drehwelle 32 zu erfassen. Hierzu weist die Drehwelle 32 eine Oberflächenmarke 36 an dem Umfangsbereich 34 auf, der sich an dem Drehmomentsensor 26 vorbei dreht.

Der Drehmomentsensor 26 ist als berührungslos arbeitender magnetorestriktiver Sensor S1 ausgebildet, der mit magnetischen Wechselfeldern arbeitet. Für nähere Einzelheiten zu solchen Sensoren wird auf folgende Literaturstellen verwiesen:

[1] Lutz May, "Drehmoment so einfach wie Temperatur messen" in Einkaufsführer Messtechnik & Sensorik 2015;

[2] Gerhard Fiedler, Franz Merold "Intelligente Sensorik-Magnetorestriktive Drehmomentsensoren" in Elektronik Journal 04/2016;
[3] H. Ruser, U. Tröltzsch, M. Horn, H.-R. Tränkler; "Magnetische Drehmomentmessung mit Low-cost Sensor" downgeloaded am 02.06.2016 unter http://www.mikrocontroller.net/attachment/22413/Drehmomentsensor-Kreuzspule.pdf; Vortrag VDE/VDI-Fachtagung 11. und 12. März 2002, Ludwigsburg, siehe auch die Referenzen in diesem Dokument;
[4] WO2015/001097 A1.

Derartige Sensoren S1 sind beispielsweise von der Fa. Torque and More GmbH, Starnberg erhältlich.

Der Sensor S1 ist vorzugsweise berührungslos auf Basis des induktiven Messprinzips ausgeführt, siehe [3], [2]. Wie in [4] ausgeführt, wird der Sensor S1 mit einem magnetischen Wechselfeld betrieben. Vorteilhaft ist dabei der Betrieb in einem aktiven Modus; so erfordert das schnelle magnetische Wechselfeld keine physikalische Veränderung an der Drehwelle 32, eine permanente und eventuell nicht langzeitstabile Magnetisierung ist nicht erforderlich, siehe [1]. Die Methodik ist unempfindlich gegenüber Versehrnutzung (Wasser, Öl, Staub), Vibration, Luftspaltänderung und kann auch keinen Schaden nehmen, wenn zu große Kräfte an der Drehwelle 32 wirken, da der Sensor S1 sich außerhalb des Kraftflusses befindet.

Zugleich kann der Sensor S1 gleichzeitig mehrere Messgrössen erfassen:

a) Prinzipiell arbeitet der S1 zum Messen eines Drehmoments oder einer Kraft, vorzugsweise mit magnetischen Wechselfeldern zwischen wenigen Hz und 10kHz. Die Eindringtiefe liegt gemäß dem Skin-Effekt in diesem Frequenzbereich bei ferromagnetischen Stoffen typischerweise bei wenigen Millimetern im Inneren des Materials. Die Orientierung einer Sender- und Empfängerspule relativ zum Messkörper, d.h. der Drehwelle 32 legt dabei die Kraftkomponente fest, die gemessen werden kann. Entscheidend für den Skin-Effekt ist, dass das eindringende Feld aufgrund der mit der Ausbreitung im Leiter verbundenen Wirbelströme je nach Frequenz mehr oder weniger stark gedämpft wird. Die Stromdichte J nimmt im Abstand z vom Rand nach folgender Gleichung exponentiell ab:

$$J = J_S e^{-z/\delta}$$

wobei Js die Stromdichte am Rand und $\delta$ die äquivalente Leitschichtdicke bezeichnen. Diese Gleichungen werden in der Praxis zur näherungsweisen Berechnung auch für radialsymmetrische Leiter verwendet. Die Leitschichtedicke kann dabei in vielen Fällen bei guten elektrischen Leitern mit folgender Gleichung in Näherung beschrieben werden:

$$\delta = \sqrt{\frac{2\rho}{\omega\mu}}$$

mit:

ρ    dem spezifischen Widerstand des Leiters; dieser ist der Kehrwert der elektrischen Leitfähigkeit $\sigma$ des Materials: $\rho = 1/\sigma$;

ω    Kreisfrequenz; und

μ    absolute Permeabilität des Leiters, welche das Produkt $\mu = \mu_0 * \mu_r$ aus der Permeabilitätskonstanten $\mu_0$ und der relativen Permeabilitätszahl $\mu_r$ des Leiters ist.

b) Wird eine wesentlich höhere Messfrequenz verwendet (> 10kHz bis MHz), so dringt das Magnetfeld nur sehr viel weniger in das Innere des Materials ein und es werden vermehrt oberflächen-sensitive Effekte detektiert. Dieser Effekt kann ausgenutzt werden, in dem auf der Welle geeignete Markierungen - Oberflächenmarke 36 - beispielsweise in Form von Eingravierungen, z.B. ein langer dünner Strich 40 oder Kratzer, z.B. etwa 1 mm dick, wenige mm lang, angebracht werden, die pro Umdrehung bequem gemessen werden können. Eine Ausgestaltung der Oberflächenmarke in Form der strichförmigen Markierung ist in Fig. 3 dargestellt.

Wertet man die Abstände der Signalpulse aus, so kann man einen Drehzahlsensor realisieren, wie dies in Fig. 4 angedeutet ist. Die einzelnen Pulse 44 können wie Impulse eines Inkrementalgebers gezählt werden; die Abstände T zwischen den Pulsen 44 ist ein Maß für die Drehzahl n (Umdrehungen pro Zeit).

Der die Oberflächenmarke 36 bildende Strich 40 kann z.B. mittels eines Lasers sehr exakt in die Oberfläche der Drehwelle 32, insbesondere in die Oberfläche der Abtriebswelle 14 eingraviert werden.

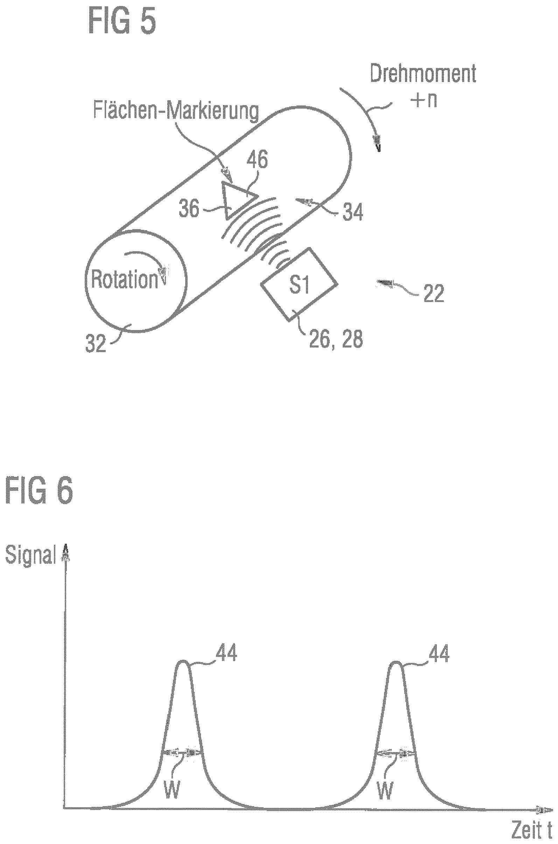

c) Bei der in b) zitierten hohen Messfrequenz besteht zudem auch die Möglichkeit, die Form der Gravierung oder Einprägung derart zu verändern, dass nicht nur die Drehzahl n, sondern auch die Drehgeschwindigkeit (insbesondere die Geschwindigkeit der Oberfläche der Drehwelle in Drehrichtung) gemessen werden kann. In Fig. 5 ist die Oberflächenmarke 36 als Dreieck 46 ausgeführt Eine Dreieckform der Oberflächenmarke 36 auf der Drehwelle 32 beispielsweise ermöglicht beispielsweise eine Messung der Drehgeschwindigkeit über die Messung der Pulsbreite W der einzelnen Pulse 44, siehe Fig. 6. Allgemein wird bei dieser Ausgestaltung eine Oberflächemarkierung 36 mit definierter Erstreckung in Umfangsrichtung angebracht.

Wie oben unter a), b), c) erläutert, wird ein magnetorestriktiver berührungsloser Sensor S1 unter Ausnutzung von magnetischen Wechselfeldern höherer Frequenz mit Sendespule und Empfangsspule verwendet, der sowohl als Drehmomentsensor 26 zum Erfassen des Drehmoments M der Drehwelle 32 und bei Fig. 2 der Abtriebswelle 14 des Elektroantriebs 10, als auch als Drehzahlsensor 28 zur Erfassung der Drehzahl n der Drehwelle 32 und somit bei Fig. 2 der Abtriebswelle 14 des Elektroantriebs 10 dient.

Wie in Fig. 2 ersichtlich liefert die Auswerteeinheit 30 somit das Ausgangs-Drehmoment M an der Abtriebswelle 14 als auch die Drehzahl n der Abtriebswelle 14, so dass daraus die Abtriebsleistung $P_{ab}$ ermittelt werden kann.

Die z.B. als Motorcontroller ausgebildete Steuerung 24 steuert den Elektromotor 12 in Abhängigkeit des so ermittelten Drehmoments M bzw. in Abhängigkeit der so ermittelten Ausgangsleistung $P_{ab}$. Insbesondere kann dadurch das Drehmoment M und/oder die Ausgangsleistung $P_{ab}$ auf einen gewünschten Wert, insbesondere eine Sollleistung $P_{soll}$ (bzw. ein Solldrehmoment) geregelt werden.

Weiter kann die Steuerung 24 aufgrund der mehreren Messgrößen sowohl eine Regelung als auch eine Sicherheitsüberwachung unabhängig von der Regelung realisieren. Beispielsweise wird der Elektromotor 12 aufgrund der gemessenen Werten M und n bzw. $P_{ab}$ geregelt und dabei die Motoreingangsleistung $P_i$ über der Motorstrom I und die Motorspannung U zur Sicherheitsabschaltung überwacht.

Voranstehend ist eine bevorzugte Ausgestaltung einer Regelvorrichtung am Beispiel der Messung eines Drehmoments an einer Abtriebswelle erläutert worden. Bei einer nicht näher dargestellten Ausgestaltung wird dagegen das zwischen Läufer und Ständer anliegende Drehmoment nicht an einer mit dem Läufer verbundenen Baueinheit, sondern an einer mit dem Ständer verbundenen Baueinheit erfasst.

In dem in den Figuren dargestellten Elektromotor gibt es eine drehende Abtriebswelle, an der das Drehmoment gemessen wird. Viele neue Elektromotoren sind jedoch Aussenläufermotoren. Z.B. ist der Ständer auf einer Achse (Welle), die z.B. stationär sein kann, befestigt und die Leistung wird direkt über den Läufer (Aussen) auf ein Rad, bzw. Propeller etc. weitergeleitet.

Eine derartige Welle, welche den Ständer hält, ist auf die gleiche Weise wie oben für die Abtriebswelle beschrieben ebenfalls geeignet, um eine Drehmomentmessung durchzuführen.

Die Ständerwelle bzw. der Drehmomentsensor kann so auch vor Schmutz geschützt werden, sodass zwischen das Messelement und das Messmedium kein Staub oder andere Verunreinigungen kommen können.

Einige auf dem Markt befindliche Elektromotoren haben einen oder mehrere Hallsensoren, z.B. drei Hall Sensoren für die Erfassung der exakten Position des Läufers. Bei einem solchen Motor kann man die Drehzahl bereits über die HallSensoren erfassen. Stattet man solche Motoren zusätzlich mit einem Drehmomentsensor aus, kann man Drehmoment und Drehzahl erfassen.

Wird die Messung an der Abtriebswelle induktiv durchgeführt, ist es vorteilhaft, darauf zu achten, dass die Abtriebswelle galvanisch vom Magneten des Motors getrennt ist, um Beeinflussungen der Messung zu vermeiden.

Während bisherige Elektromotoren drehzahlgeregelt ausgeführt sind, sind die hier dargestellten Motoren und elektrischen Maschinen drehmomentgeregelt ausgeführt.

Bezugszeichenliste:

10 Elektroantrieb
12 Elektromotor (Beispiel für eine elektrische Maschine)
14 Abtriebswelle
20 Drehmomentregelvorrichtung
22 Drehmomentsensoranordnung
24 Steuerung
26 Drehmomentsensor
28 Drehzahlsensor
30 Auswerteeinheit
32 Drehwelle
34 Umfangsbereich
36 Oberflächenmarke
40 Strich
44 Puls
46 Dreieck
S1 Sensor
T Zeitabstand/Periode
W Pulsbreite

**Patentansprüche**

1. Drehmomentregelvorrichtung (20) zum Regeln der Ausgangsleistung und/oder des Drehmoments eines Elektroantriebes (10), der einen Elektromotor (12) mit Ständer und Läufer hat, umfassend:

   einen Drehmomentsensor (26) zum Messen eines durch den Elektromotor erzeugten, zwischen dem Ständer und dem Läufer anliegenden Drehmoments und eine mit dem Drehmomentsensor (26) verbundene Steuerung (24), die dazu eingerichtet ist, den Elektromotor (12) in Abhängigkeit von dem durch den Drehmomentsensor (26) gemessenen Drehmoment zu steuern.

2. Drehmomentregelvorrichtung (20) nach Anspruch 1, **gekennzeichnet durch** einen Drehzahlsensor (28) zur Messung der Drehzahl der Abtriebswelle (14), wobei die Steuerung (24) mit dem Drehzahlsensor (28) verbunden ist und dazu eingerichtet ist, den Elektromotor (12) in Abhängigkeit von dem **durch** den Drehmomentsensor (26) gemessenen Drehmoment und der **durch** den Drehzahlsensor (28) ermittelten Drehzahl zu steuern.

3. Drehmomentregelvorrichtung (20) nach Anspruch 2, **dadurch gekennzeichnet,** **dass** die Steuerung (24) dazu eingerichtet ist, aus dem Drehmoment und der Drehzahl die Ausgangsleistung des Elektroantriebes (10) zu ermitteln und den Elektromotor (12) in Abhängigkeit von der ermittelten Ausgangsleistung zu steuern.

4. Drehmomentregelvorrichtung (20) nach Anspruch 3, **dadurch gekennzeichnet,** **dass** die Steuerung (24) zur Überwachung der Leistungsabgabe des Elektroantriebes (14) eingerichtet ist.

5. Drehmomentregelvorrichtung (20) nach einem der voranstehenden Ansprüche, **dadurch gekennzeichnet**,

   5.1 dass die Steuerung (24) dazu eingerichtet ist, den Elektromotor (12) abhängig von einer aus einem Eingangsstrom und einer Eingangsspannung ermittelten Eingangsleistung und einer aus dem Drehmoment ermittelten Ausgangsleistung und einer Sollleistung zu steuern und/oder zu überwachen und/oder
   5.2 dass der Drehmomentsensor (36) ein induktiver berührungsloser Sensor (S1) zur induktiven Drehmomenterfassung mittels magnetischer Wechselfelder ist, und/oder

6. Drehmomentregelvorrichtung (20) nach einem der voranstehenden Ansprüche, **dadurch gekennzeichnet,** **dass** der Drehmomentsensor (36) zur Messung des Drehmoments an einem mit dem Läufer verbundenen oder an einem mit dem Ständer verbundenen Bauteil ausgebildet ist, insbesondere derart, **dass** der Drehmomentsensor (36) zur Messung des Drehmoments an einer mit dem Läufer verbundenen Abtriebswelle (32) und/oder zur Messung des Drehmoments oder einer Kraft an einer mit dem Ständer verbundenen Befestigungsbaueinheit ausgebildet ist.

7. Drehmomentregelvorrichtung nach einem der voranstehenden Ansprüche, **dadurch gekennzeichnet,** **dass** der Drehmomentsensor (26) zur Messung eines Drehmoments an einer mit dem Läufer verbundenen Abtriebswelle (14) durch induktives Messen des Drehmoments der Abtriebswelle (14) mittels magnetischer Wechselfelder und eine Auswerteeinheit (30) zur Auswertung des Signals des Drehmomentsensors (26) ausgebildet ist, wobei die Abtriebswelle (14) eine Oberflächenmarke (36) an einem durch den Drehmomentsensor (26) erfassten Umfangsbereich (34) hat, die sich bei Drehung der Abtriebswelle (14) um die Drehachse dreht und bei Passieren des Drehmomentsensors (26) eine Veränderung im Signal des Drehmomentsensors (26) hervorruft, wobei die Auswerteeinheit (30) dazu ausgebildet ist, aus der Veränderung des Signals des Drehmomentsensors (26) eine Drehzahl der Abtriebswelle (14) zu ermitteln.

8. Drehmomentregelvorrichtung nach Anspruch 7, **dadurch gekennzeichnet**,

   8.1 dass die Oberflächenmarke (36) eine sich in axialer Richtung erstreckende Abflachung, Einkerbung oder Erhöhung an der Oberfläche des Umfangsbereichs (34) umfasst und/oder
   8.2 dass die Oberflächenmarke (36) eine vorgegebene Erstreckung in Umfangsrichtung hat, wobei die Auswerteeinrichtung (30) dazu eingerichtet ist, aus der Länge einer durch die Oberflächenmarke (36) in dem Signal des Drehmomentsensors verursachten Signaländerung eine Drehgeschwindigkeit zu ermitteln.

9. Elektroantrieb (10), umfassend eine Drehmomentregelvorrichtung (20) nach einem der voranstehenden Ansprüche.

10. Verfahren zum Regeln der Ausgangsleistung und/oder des Drehmoments eines Elektroantriebes (10), der einen Elektromotor (12) mit Ständer und Läufer hat, umfassend:

    Messen eines zwischen dem Ständer und dem Läufer anliegenden Drehmoments mittels eines Drehmomentsensors (26) und Steuern des Elektromotors (12) in Abhängigkeit von dem durch den Drehmomentsensor (26) gemessenen Drehmoment.

11. Verfahren nach Anspruch 10, **gekennzeichnet durch** wenigstens einen mehrere oder alle der folgenden Schritte:

    11.1 Messen des Drehmoments an einer mit dem Läufer verbundenen Abtriebswelle,
    11.2 Messen einer Kraft an einer mit dem Ständer verbundenen Befestigungsbaueinheit und Ermitteln des Drehmoments aus der Kraft;
    11.3 Messen des Drehmoments an einem mit dem Läufer oder dem Ständer verbundenen Baueinheit; und/oder
11.4 berührungsloses induktives Messen des Drehmoments, insbesondere an der Abtriebswelle (14), der Befestigungsbaueinheit oder der Baueinheit mittels magnetischer Wechselfelder.

12. Verfahren nach einem der voranstehenden Ansprüche, **gekennzeichnet durch** Messen der Drehzahl der Abtriebswelle (14) und Steuern des Elektromotors (12) in Abhängigkeit von dem **durch** den Drehmomentsensor (26) gemessenen Drehmoment und der gemessenen Drehzahl.

13. Verfahren nach Anspruch 12, **gekennzeichnet durch** Ermitteln der Ausgangsleistung des Elektroantriebes (10) aus dem Drehmoment und der Drehzahl und Steuern des Elektromotors (12) in Abhängigkeit von der ermittelten Ausgangsleistung.

14. Verfahren nach Anspruch 12 oder 13, **gekennzeichnet durch** Überwachen der Leistungsabgabe des Elektroantriebes (10) mittels der Ausgangsleistung, der aus einem Eingangsstrom und einer Eingangsspannung ermittelten Eingangsleistung und einer Sollleistung.

15. Verfahren nach einem der Ansprüche 12 bis 14, **gekennzeichnet durch** wenigstens einen, mehrere oder alle der folgenden Schritte:

    15.1 Verwenden oder Vorsehen einer Abtriebswelle (14), die eine Oberflächenmarke (36) an einem **durch** den Drehmomentsensor (26) erfassten Umfangsbereich hat, welche sich bei Drehung der Abtriebswelle (14) um die Drehachse dreht und bei Passieren des Drehmomentsensors (26) eine Veränderung im Signal des Drehmomentsensors (26) hervorruft, und Ermitteln der Drehzahl der Abtriebswelle (14) aus der Veränderung des Signals des Drehmomentsensors (26) und/oder
    15.2 Vorsehen einer sich in axialer Richtung erstreckenden Abflachung, Einkerbung oder Erhöhung an der Oberfläche des Umfangsbereichs zum Bilden der Oberflächenmarke (36); und/oder
    15.3 Vorsehen der Oberflächenmarke (36) mit einer vorgegebenen Erstreckung in Umfangsrichtung und Ermitteln der Drehgeschwindigkeit aus der Länge einer **durch** die Oberflächenmarke (36) in dem Signal des Drehmomentsensors (26) verursachten Signaländerung.

FIG 1

Verlustleistung
Pv

Zugeführte
Leistung
Pin=U*I

10

12

14

Abgeführte
mechanische
Leistung
Pab=2*Pi*M*n

FIG 2

30

Pmech=2*Pi*M*n

20

24

12

22

Sensor S1
- Drehzahlsensor
- Kontaktloser
Drehmomentsensor

$P_{el}$=U*I

Motorcontroller

14

26

28

32

10

$P_{soll}$

FIG 3

Strich-Markierung (case)

Drehmoment
+n

40

36

34

Rotation
U

S1

22

32

26, 28

FIG 4

Signal

44

44

Zeit t

## FIG 5

Drehmoment
+n

Flächen-Markierung

46

36 — ▷

34

Rotation

S1

22

32

26, 28

## FIG 6

Signal

44

44

W

W

Zeit t

Europäisches
Patentamt

European
Patent Office

Office européen
des brevets

# EUROPÄISCHER RECHERCHENBERICHT

Nummer der Anmeldung

EP 17 17 3121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 60 926 A1 (OTIS ELEVATOR CO [US]) 13. Juni 2002 (2002-06-13) * das ganze Dokument * ----- | 1-15 | INV. H02P29/024 H02P29/032 |
| A | US 2015/175010 A1 (TANG YIFAN [US]) 25. Juni 2015 (2015-06-25) * Absätze [0015], [0028] * * Absatz [0030] - Absatz [0045] * ----- | 1-9 | ADD. G01P3/48 G01L3/10 |
| A | DE 29 39 566 A1 (ZAHNRADFABRIK FRIEDRICHSHAFEN [DE]) 9. April 1981 (1981-04-09) * Seite 5, Zeile 1 - Zeile 4 * * Seite 8, Zeile 1 - Zeile 12 * * Seite 9, Zeile 11 - Zeile 18 * * Seite 11, Zeile 10 - Zeile 22 * * Seite 16, Zeile 24 - Seite 18, Zeile 1; Abbildungen 15-17c * ----- | 1-15 | |
| X | DE 103 06 594 A1 (SAUER DANFOSS INC [US]) 17. März 2005 (2005-03-17) * Absätze [0007], [0016] * * Absatz [0022] - Absatz [0025] * * Absatz [0033] - Absatz [0034] * * Absatz [0040] - Absatz [0041]; Abbildung 2 * ----- | 1-15 | RECHERCHIERTE SACHGEBIETE (IPC) H02P G01P G01L H02K |

Der vorliegende Recherchenbericht wurde für alle Patentansprüche erstellt

| Recherchenort | Abschlußdatum der Recherche | Prüfer |
|---|---|---|
| München | 16. Oktober 2017 | Wimböck, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 3121

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2017

| Im Recherchenbericht angeführtes Patentdokument | Datum der Veröffentlichung | Mitglied(er) der Patentfamilie | Datum der Veröffentlichung |
|---|---|---|---|
| DE 10160926 A1 | 13-06-2002 | CN 1358661 A<br>DE 10160926 A1<br>JP 3936578 B2<br>JP 2002211846 A<br>US 6488128 B1 | 17-07-2002<br>13-06-2002<br>27-06-2007<br>31-07-2002<br>03-12-2002 |
| US 2015175010 A1 | 25-06-2015 | KEINE | |
| DE 2939566 A1 | 09-04-1981 | DE 2939566 A1<br>FR 2466761 A1<br>US 4364278 A | 09-04-1981<br>10-04-1981<br>21-12-1982 |
| DE 10306594 A1 | 17-03-2005 | CN 1445519 A<br>DE 10306594 A1<br>JP 2003294551 A<br>US 2003172747 A1 | 01-10-2003<br>17-03-2005<br>15-10-2003<br>18-09-2003 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005037884 A1

- WO 2015001097 A1

**In der Beschreibung aufgeführte Nicht-Patentliteratur**

- **LUTZ MAY.** Drehmoment so einfach wie Temperatur messen. *Einkaufsführer Messtechnik & Sensorik,* 2015
- **GERHARD FIEDLER ; FRANZ MEROLD.** Intelligente Sensorik-Magnetorestriktive Drehmomentsensoren. *Elektronik Journal,* April 2016

- **H. RUSER ; U. TRÖLTZSCH ; M. HORN ; H.-R. TRÄNKLER.** *Magnetische Drehmomentmessung mit Low-cost Sensor,* 02. Juni 2016, http://www.mikrocontroller.net/attachment/22413/Drehmomentsensor-Kreuzspule.pdf